# EUROPEAN PATENT SPECIFICATION

(11) **EP 2 538 312 B1**
(45) Date of publication and mention of the grant of the patent: **22.10.2014**
(21) Application number: 11171389.7
(22) Date of filing: 24.06.2011
(51) Int. Cl.: G06F 1/16, G06F 3/044, G06F 3/041

(54) **Touch-sensitive display and electronic device including same**
Berührungsempfindliche Anzeige und elektronische Vorrichtung damit
Affichage tactile et dispositif électronique l'incluant

(43) Date of publication of application: 26.12.2012
(73) Proprietor: BlackBerry Limited, Waterloo, ON N2K 0A7 (CA)
(72) Inventor: Dolson, John Edward, Ottawa, Ontario K2K 3K1 (CA); Robinson, James Alexander, Waterloo, Ontario N2L 3W8 (CA); Singh, Amit Pal, Waterloo, Ontario N2L 3W8 (CA); Ho, Christopher Ying Wai, Waterloo, Ontario N2L 3W8 (CA); Timmerman, Kevin Paul, Waterloo, Ontario N2L 3W8 (CA)
(74) Representative: Noble, Nicholas

(56) References cited:
- EP-A1- 2 273 799
- EP-A1- 2 317 420
- WO-A1-2010/044984
- WO-A2-2004/010369
- US-A1- 2006 075 831
- US-A1- 2009 128 503
- US-A1- 2009 174 687
- US-A1- 2010 045 632

## Description

The present disclosure relates to touch-sensitive displays including, but not limited to, portable electronic devices having touch-sensitive displays.

### BACKGROUND

Electronic devices, including portable electronic devices, have gained widespread use and may provide a variety of functions including, for example, telephonic, electronic messaging and other personal information manager (PIM) application functions. Portable electronic devices include several types of devices including mobile stations such as simple cellular telephones, smart telephones (smart phones), Personal Digital Assistants (PDAs), tablet computers, and laptop computers, with wireless network communications or near-field communications connectivity such as Bluetooth® capabilities.

Portable electronic devices such as PDAs, or tablet computers are generally intended for handheld use and ease of portability. Smaller devices are generally desirable for portability. A touch-sensitive display, also known as a touchscreen display, is particularly useful on handheld devices, which are small and may have limited space for user input and output. The information displayed on the display may be modified depending on the functions and operations being performed.

U.S. 2009/0174687 A1 discloses a user interface system that includes a layer defining a surface, a substrate supporting the layer and at least partially defining a cavity, a displacement device coupled to the cavity and adapted to expand the cavity, thereby deforming a particular region of the surface. The user interface system also includes touch sensor coupled to the substrate and adapted to sense a user proximate the particular region of the surface, and a display coupled to the substrate and adapted to output images to the user.

EP 2 317 420 A1 discloses a touch sensitive device that includes a dielectric layer between a cover layer and a touch sensor layer. The dielectric layer can include a porous polymer material, such as polyethylene plastic, or a composite material, such as a ceramic mixture.

WO 2004/010369 A2 discloses a touch sensor that has a sensor circuit disposed between a backing layer and a thin dielectric film. A removable protective element is disposed adjacent to the thin dielectric film to protect the thin dielectric film from abrasion by touch implements or other environmental factors.

US 2006/075831 A1 discloses a fingerprint sensor that includes a measuring section E that has an inner space H that is defined by the upper and lower substrates 23, 21, and fluid collecting section 30 that has an inner space G that communicates with the inner space H of the measuring section E.

US 2010/045632 A1 discloses a capacitive positioning sensor that includes a plurality of drive electrodes that extend in a first direction on a first plane, and a plurality of sense electrodes that extend in second direction on a second plane offset from the first place so the sense electrodes cross the drive electrodes at a plurality of intersections which collectively form a position sensing array. The sense electrodes have branches that extend in the first direction part of the way towards each adjacent sense electrode so that the end portions of the branches of adjacent sense electrodes co-extend with each other in the first direction separated by a distance sufficiently small that capacitive coupling to the drive electrode adjacent to the co-extending portion is reduced.

Improvements in electronic devices with displays are desirable.

### SUMMARY

A touch-sensitive display includes a display, a capacitive touch sensor disposed on the display, a cover spaced from the capacitive touch sensor, and a bladder disposed in a cavity between the capacitive touch sensor and the cover wherein a liquid is disposed within the bladder. An electronic device includes a touch-sensitive display including a display, a capacitive touch sensor disposed on the display, a cover spaced from the capacitive touch sensor, and a bladder disposed in a cavity between the capacitive touch sensor and the cover, wherein a liquid is disposed within the bladder, and a processor coupled to the touch-sensitive display.

### BRIEF DESCRIPTION OF THE DRAWINGS

FIG. 1 is a block diagram of a portable electronic device in accordance with an example embodiment.
FIG. 2 is a cross section of a portable electronic device including a touch-sensitive display in accordance with the disclosure.
FIG. 3 is a cross section of a portable electronic device with a depressed touch-sensitive display in accordance with the disclosure.
FIG. 4 is a front view of a portable electronic device in accordance with the disclosure.

### DETAILED DESCRIPTION

The following describes an electronic device and a touch-sensitive display that includes a display, a capacitive touch sensor disposed on the display, a cover spaced from the capacitive touch sensor, and a liquid disposed within a cavity between the capacitive touch sensor and the cover.

For simplicity and clarity of illustration, reference numerals may be repeated among the figures to indicate corresponding or analogous elements. Numerous details are set forth to provide an understanding of the embodiments described herein. The embodiments may be practiced without these details. In other instances, well-known methods, procedures, and components have not been described in detail to avoid obscuring the embodiments described. The description is not to be considered as limited to the scope of the embodiments described herein.

The disclosure generally relates to an electronic device, such as a portable electronic device or non-portable electronic device. Examples of portable electronic devices include mobile, or handheld, wireless communication devices such as pagers, cellular phones, cellular smart-phones, wireless organizers, personal digital assistants, wirelessly enabled notebook computers, tablet computers, mobile internet devices, and so forth. The portable electronic device may be a portable electronic device without wireless communication capabilities, such as handheld electronic games, digital photograph albums, digital cameras, media players, e-book readers, and so forth. Examples of non portable electronic devices include desktop computers, electronic white boards, smart boards utilized for collaboration, built-in monitors or displays in furniture or appliances, and so forth.

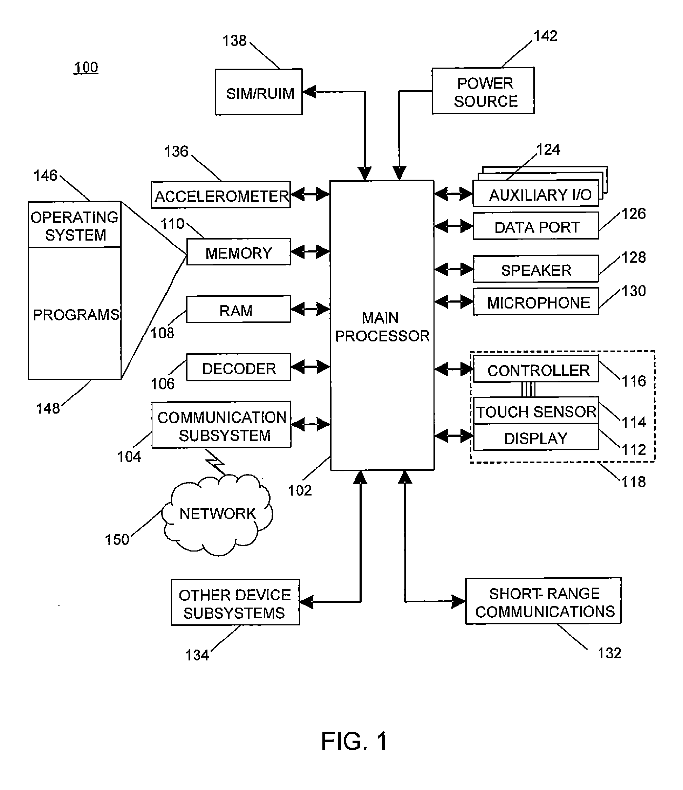

A block diagram of an example of a portable electronic device 100 is shown in FIG. 1. The portable electronic device 100 includes multiple components, such as a processor 102 that controls the overall operation of the portable electronic device 100. Communication functions, including data and voice communications, are performed through a communication subsystem 104. Data received by the portable electronic device 100 is decompressed and decrypted by a decoder 106. The communication subsystem 104 receives messages from and sends messages to a wireless network 150. The wireless network 150 may be any type of wireless network, including, but not limited to, data wireless networks, voice wireless networks, and networks that support both voice and data communications. A power source 142, such as one or more rechargeable batteries or a port to an external power supply, powers the portable electronic device 100.

The processor 102 interacts with other components, such as Random Access Memory (RAM) 108, memory 110, a touch-sensitive display 118 which includes a display 112 with a touch sensor 114, which may be a touch-sensitive overlay, operably coupled to an electronic controller 116. The processor 102 also interacts with an auxiliary input/output (I/O) subsystem 124, a data port 126, a speaker 128, a microphone 130, short-range communications 132, and other device subsystems 134. User-interaction with a graphical user interface is performed through the touch sensor 114. The processor 102 interacts with the touch sensor 114 via the electronic controller 116. Information, such as text, characters, symbols, images, icons, and other items that may be displayed or rendered on a portable electronic device, is displayed on the touch-sensitive display 118 via the processor 102. The processor 102 may interact with an accelerometer 136 that may be utilized to detect direction of gravitational forces or gravity-induced reaction forces.

To identify a subscriber for network access, the portable electronic device 100 uses a Subscriber Identity Module or a Removable User Identity Module (SIM/RUIM) card 138 for communication with a network, such as the wireless network 150. Alternatively, user identification information may be programmed into memory 110.

The portable electronic device 100 includes an operating system 146 and software programs or components 148 that are executed by the processor 102 and are typically stored in a persistent, updatable store such as the memory 110. Additional applications or programs may be loaded onto the portable electronic device 100 through the wireless network 150, the auxiliary I/O subsystem 124, the data port 126, the short-range communications subsystem 132, or any other suitable subsystem 134.

A received signal, such as a text message, an e-mail message, or web page download, is processed by the communication subsystem 104 and input to the processor 102. The processor 102 processes the received signal for output to the display 112 and/or to the auxiliary I/O subsystem 124. A subscriber may generate data items, for example e-mail messages, which may be transmitted over the wireless network 150 through the communication subsystem 104. For voice communications, the overall operation of the portable electronic device 100 is similar. The speaker 128 outputs audible information converted from electrical signals, and the microphone 130 converts audible information into electrical signals for processing.

The touch-sensitive display 118 may be any suitable capacitive touch-sensitive display, such as a self-capacitive or mutual capacitive touch-sensitive display, as known in the art. A capacitive touch-sensitive display includes a capacitive touch sensor 114. The touch sensor 114 may be an assembly of multiple layers in a stack including, for example, a substrate, a ground shield layer, a barrier layer, and one or more capacitive touch sensing layers, separated by a substrate or other barrier. The capacitive touch sensing layers may be any suitable material, such as patterned indium tin oxide (ITO) to provide sets of electrodes utilized for touch sensing. Alternatively, the layers of the touch sensor 114 may include a substrate, such as a glass substrate, and a layer including a set of electrodes on one side of the glass sheet or substrate. A second layer including a set of electrodes may optionally be included on an opposing side of the substrate.

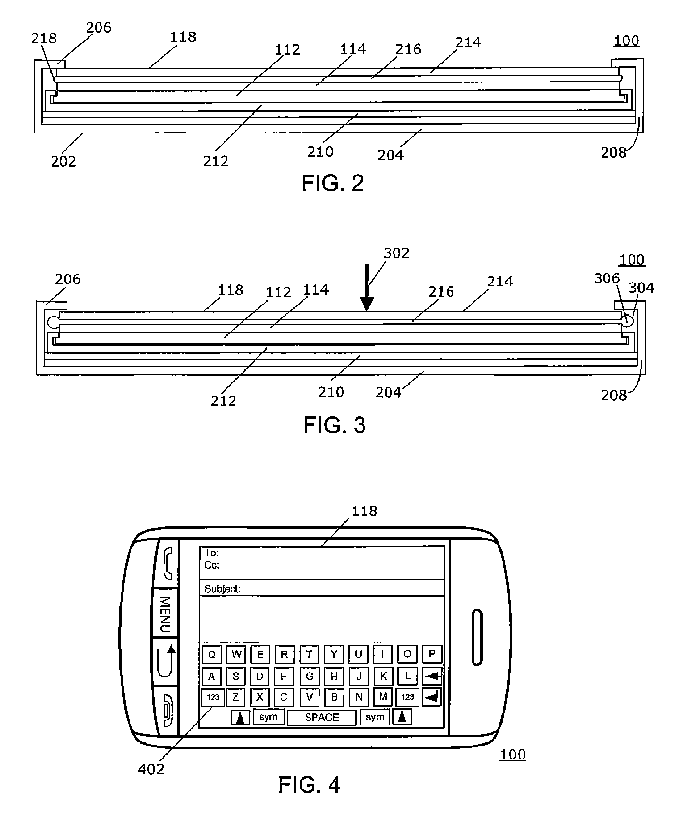

A cross section of a portable electronic device 100 taken through a center of the touch-sensitive display 118 is shown in FIG. 2. The portable electronic device 100 includes a housing 202 that encloses components such as shown in FIG. 1. The housing 202 may include a back 204, sidewalls 208, and a frame 206 that houses the touch-sensitive display 118. A base 210 extends between the sidewalls 208, generally parallel to the back 204. The display 112 and the touch sensor 114 are supported on a support tray 212 of suitable material, such as magnesium.

The display 112 may be any suitable display, such as a liquid crystal display (LCD), a light-emitting diode (LED) display, or an organic light-emitting diode (OLED) display.

The touch sensor 114 is disposed on the display 112 and may be adhered to the display 112, for example, utilizing an optically clear adhesive. The optically clear adhesive may be, for example, an adhesive sheet or tape, or a hardened or cured liquid adhesive.

A cover 214 is spaced from the touch sensor 114 by a bladder 216. The cover 214 may be a glass cover or polymeric material and may include, for example, a protective anti-reflective coating. The bladder 216 is a flexible bag or container of suitable translucent or transparent material such as, for example, silicone or flexible plastic. A liquid is disposed in the bladder 216 that is located in a cavity between the cover 214 and the touch sensor 114. The liquid may be, for example, water, glycol, or other suitable translucent or transparent liquid. The liquid has a suitable dielectric constant to facilitate detection, by the touch sensor 114, of a touch on the cover 214. The bladder 216 extends across the touch sensor 114 and covers the visible area of the display 112. The cavity, may be thin, for example, about 0.3 millimeters.

The bladder 216 may be disposed on the touch sensor 114 without adhering the bladder 216 to the touch sensor 114. The cover 214 may be disposed on the bladder 216 without adhering the cover 214 to the bladder 216. Thus, the bladder may be disposed between the touch sensor 114 and the cover 214 without adhering to either the touch sensor 114 or the cover 214. The bladder 216 may, however, cling to the cover 214 and/or the touch sensor 114 as a result of material properties, such as static cling or friction, without the use of an adhesive.

The bladder 216 is spaced from the sidewalls 208 to facilitate elastic deformation, or expansion, of the sides 218 of the bladder 216. When a force, such as the force 302 illustrated in FIG. 3, is applied to the cover 214, and the force moves or depresses the cover 214 toward the touch-sensitive display 118, the sides 218 expand. A portion of the volume of liquid filling the cavity is forced toward the sides 218 and the sides 218 elastically deform by extending into the space between the touch-sensitive display 118 and the sidewalls 208 resulting in expanded sides 304. The expanded sides 304 provide a reservoir 306 in fluid communication with the cavity to receive liquid that flows from the cavity into the reservoir 306. Although the volume of liquid in the cavity, between the cover 214 and the touch sensor 114 may be reduced, the cover 214 remains spaced from the touch sensor 114. When the force is discontinued, the bladder 216 returns to the shape of the bladder 216 prior to the application of the force and the liquid returns from the reservoir 306, into the cavity between the cover 214 and the touch sensor 114.

Although the touch-sensitive display 118 is shown as floating with respect to the housing 202 in FIG. 3, the touch-sensitive display 118 may alternatively be fixed in a fixed position with respect to the housing 202.

One or more touches on the cover 214, also known as touch contacts or touch events, may be detected by the touch-sensitive display 118. The processor 102 may determine attributes of the touch, including a location of a touch. Touch location data may include an area of contact or a single point of contact, such as a point at or near a center of the area of contact. A signal is provided to the controller 116 in response to detection of a touch. A touch may be detected from any suitable input member, such as a finger, thumb, appendage, or other objects, for example, a stylus, pen, or other pointer, depending on the nature of the touch-sensitive display 118. The controller 116 and/or the processor 102 may detect a touch by any suitable input member on the cover of the touch-sensitive display 118. Multiple simultaneous touches may be detected.

One or more gestures may also be detected by the touch-sensitive display 118. A gesture, such as a swipe, also known as a flick, is a particular type of touch on a touch-sensitive display 118 and may begin at an origin point and continue to an end point. A gesture may be identified by attributes of the gesture, including the origin point, the end point, the distance traveled, the duration, the velocity, and the direction, for example. A gesture may be long or short in distance and/or duration. Two points of the gesture may be utilized to determine a direction of the gesture.

A front view of an example of the electronic device 100 is shown in FIG. 4. A keyboard 402 is displayed on the touch-sensitive display 118. When a key of the keyboard 402 is selected by a touch on the cover 214, a force imparted on the cover 214 that is sufficient to depress the cover 214 causes expansion of the sides of the bladder 216 as liquid flows from the cavity into the reservoir 306 provided by the expanded sides 304. Although the cover 214 may be depressed, a smaller volume of liquid remains in the cavity, between the cover 214 and the touch sensor 114. Thus, when a force is imparted on the cover, a volume of liquid remains between the cover 214 and the touch sensor 114 and the cover 214 remains spaced from the touch sensor 114. When the force is discontinued, the volume of liquid that flowed into the reservoir 306 returns to the cavity.

Utilizing a bladder between the cover and the touch sensor, the cover may be disposed on the bladder without adhering the cover to the touch sensor. Manufacturing costs may be reduced by not adhering the cover to the touch sensor. Further, the cover may be removed from the remainder of the touch-sensitive display, facilitating replacement of the cover without replacing the touch sensor and the display. The bladder provides a liquid disposed within a cavity between the cover and the touch sensor and a suitable liquid may be utilized to provide a sufficiently high dielectric constant to facilitate detection of a touch on the cover. The bladder also provides cushioning for the cover and the touch sensor and may reduce the ingress of the dust and water between the cover and the touch sensor.

The present disclosure may be embodied in other specific forms without departing from its essential characteristics. The described embodiments are to be considered in all respects only as illustrative and not restrictive. The scope of the present disclosure is, therefore, indicated by the appended claims rather than by the foregoing description. All changes that come within the meaning and range of equivalency of the claims are to be embraced within their scope.

## Claims

1. A touch-sensitive display (118) comprising:
a display (112);
a capacitive touch sensor (114) disposed on the display (112);
a cover (214) spaced from the capacitive touch sensor (114);
and **characterised in that**
a bladder (216) disposed in a cavity between the capacitive touch sensor (114) and the cover (214), wherein a liquid is disposed within the bladder (216).

2. The touch-sensitive display (118) according to claim 1, wherein the bladder extends across the capacitive touch sensor (114) and covers a visible area of the display (212).

3. The touch-sensitive display (118) according to claim 1, wherein the bladder (216) comprises a silicone bladder.

4. The touch-sensitive display (118) according to claim 1, comprising a reservoir (306) in fluid communication with the bladder (216) to facilitate flow of the liquid into the reservoir (306) when a force is applied to the cover (214).

5. The touch-sensitive display (118) according to claim 1, wherein the bladder (216) is expandable on at least one side to facilitate flow of the liquid when a force is applied to the cover (214).

6. The touch-sensitive display (118) according to claim 1, wherein the capacitive touch sensor (114) comprises a first set of electrodes and a second set of electrodes separated from the first set of electrodes by a barrier layer.

7. The touch-sensitive display (118) according to claim 1, wherein the capacitive touch sensor (114) comprises a glass sheet including electrodes deposited on at least one side.

8. The touch-sensitive display (118) according to claim 1, wherein the bladder (216) is disposed between the capacitive touch sensor (114) and the cover (214) without adhesive.

9. An electronic device (100) comprising:
a touch-sensitive display (118) comprising
a display (112);
a capacitive touch sensor (114) disposed on the display (112);
a cover (214) spaced from the capacitive touch sensor (114);
at least one processor (102) coupled to the touch-sensitive display (118);
and **characterized in that**
a bladder (216) disposed in a cavity between the capacitive touch sensor (114) and the cover (214), wherein a liquid is disposed within the bladder (216);

10. The electronic device (100) according to claim 9, wherein the bladder (216) extends across the capacitive touch sensor (114) and covers a visible area of the display (212).

11. The electronic device (100) according to claim 10, wherein the bladder (216) comprises a silicone bladder.

12. The electronic device (100) according to claim 9, comprising a reservoir (306) in fluid communication with the bladder (216) to facilitate flow of the liquid into the reservoir (306) when a force is applied to the cover (214).

13. The electronic device (100) according to claim 9, wherein the bladder (216) is expandable on at least one side to facilitate flow of the liquid when a force is applied to the cover (214).

14. The electronic device (100) according to claim 9, wherein the capacitive touch sensor (214) comprises a first set of electrodes and a second set of electrodes separated from the first set of electrodes by a barrier layer.

15. The electronic device (100) according to claim 9, wherein the bladder (216) is disposed between the capacitive touch sensor (114) and the cover (214) without adhesive.

## Patentansprüche

1. Eine berührungsempfindliche Anzeige (118), die aufweist:
eine Anzeige (112);
einen kapazitiven Berührungssensor (114), der auf der Anzeige (112) angeordnet ist;
eine Abdeckung (214), die von dem kapazitiven Berührungssensor (114) beabstandet ist;
und **gekennzeichnet durch**
eine Blase (216), die in einem Hohlraum zwischen dem kapazitiven Berührungssensor (114) und der Abdeckung (214) angeordnet ist, wobei eine Flüssigkeit in der Blase (216) vorgesehen ist.

2. Die berührungsempfindliche Anzeige (118) gemäß Anspruch 1, wobei sich die Blase über den kapazitiven Berührungssensor (114) erstreckt und einen sichtbaren Bereich der Anzeige (212) abdeckt.

3. Die berührungsempfindliche Anzeige (118) gemäß Anspruch 1, wobei die Blase (216) eine Silikon-Blase aufweist.

4. Die berührungsempfindliche Anzeige (118) gemäß Anspruch 1, die ein Reservoir (306) in Fluidverbindung mit der Blase (216) aufweist, um einen Fluss der Flüssigkeit in das Reservoir (306) zu erleichtern, wenn eine Kraft auf die Abdeckung (214) angewendet wird.

5. Die berührungsempfindliche Anzeige (118) gemäß Anspruch 1, wobei die Blase (216) auf zumindest einer Seite expandierbar ist, um einen Fluss der Flüssigkeit zu erleichtern, wenn eine Kraft auf die Abdeckung (214) angewendet wird.

6. Die berührungsempfindliche Anzeige (118) gemäß Anspruch 1, wobei der kapazitive Berührungssensor (114) einen ersten Satz von Elektroden und einen zweiten Satz von Elektroden aufweist, der von dem ersten Satz von Elektroden durch eine Sperrschicht getrennt ist.

7. Die berührungsempfindliche Anzeige (118) gemäß Anspruch 1, wobei der kapazitive Berührungssensor (114) eine Glasscheibe aufweist mit Elektroden, die auf zumindest einer Seite aufgebracht sind.

8. Die berührungsempfindliche Anzeige (118) gemäß Anspruch 1, wobei die Blase (216) zwischen dem kapazitiven Berührungssensor (114) und der Abdeckung (214) ohne Klebstoff angeordnet ist.

9. Eine elektronische Vorrichtung (100), die aufweist:
eine berührungsempfindliche Anzeige (118), die aufweist eine Anzeige (112);
einen kapazitiven Berührungssensor (114), der auf der Anzeige (112) angeordnet ist;
eine Abdeckung (214), die von dem kapazitiven Berührungssensor (114) beabstandet ist;
zumindest einen Prozessor (102), der mit der berührungsempfindlichen Anzeige (118) gekoppelt ist;
und **gekennzeichnet durch**
eine Blase (216), die in einem Hohlraum zwischen dem kapazitiven Berührungssensor (114) und der Abdeckung (214) angeordnet ist, wobei eine Flüssigkeit in der Blase (216) vorgesehen ist.

10. Die elektronische Vorrichtung (100) gemäß Anspruch 9, wobei sich die Blase (216) über den kapazitiven Berührungssensor (114) erstreckt und einen sichtbaren Bereich der Anzeige (212) abdeckt.

11. Die elektronische Vorrichtung (100) gemäß Anspruch 10, wobei die Blase (216) eine Silikon-Blase aufweist.

12. Die elektronische Vorrichtung (100) gemäß Anspruch 9, die ein Reservoir (306) in Fluidverbindung mit der Blase (216) aufweist, um einen Fluss der Flüssigkeit in das Reservoir (306) zu erleichtern, wenn eine Kraft auf die Abdeckung (214) angewendet wird.

13. Die elektronische Vorrichtung (100) gemäß Anspruch 9, wobei die Blase (216) auf zumindest einer Seite expandierbar ist, um einen Fluss der Flüssigkeit zu erleichtern, wenn eine Kraft auf die Abdeckung (214) angewendet wird.

14. Die elektronische Vorrichtung (100) gemäß Anspruch 9, wobei der kapazitive Berührungssensor (214) einen ersten Satz von Elektroden und einen zweiten Satz von Elektroden aufweist, der von dem ersten Satz von Elektroden durch eine Sperrschicht getrennt ist.

15. Die elektronische Vorrichtung (100) gemäß Anspruch 9, wobei die Blase (216) zwischen dem kapazitiven Berührungssensor (114) und der Abdeckung (214) ohne Klebstoff angeordnet ist.

## Revendications

1. Dispositif d'affichage tactile (118) comprenant :
un écran (112) ;
un capteur de pression capacitif (114) disposé sur l'écran (112) ;
un couvercle (214) éloigné du capteur de pression capacitif (114) ;
et **caractérisé en ce que** :
une vessie (216) est disposée dans une cavité entre le capteur de pression capacitif (114) et le couvercle (214), un liquide étant disposé à l'intérieur de la vessie (216).

2. Dispositif d'affichage tactile (118) selon la revendication 1, dans lequel la vessie s'étend sur le capteur de pression capacitif (114) et recouvre une zone visible de l'écran (212).

3. Dispositif d'affichage tactile (118) selon la revendication 1, dans lequel la vessie (216) consiste en une vessie de silicone.

4. Dispositif d'affichage tactile (118) selon la revendication 1, comprenant un réservoir (306) en communication de fluide avec la vessie (216) afin de faciliter l'écoulement du liquide dans le réservoir (306) lorsqu'une force est appliquée sur le couvercle (214).

5. Dispositif d'affichage tactile (118) selon la revendication 1, dans lequel la vessie (216) est expansible sur au moins un côté pour faciliter l'écoulement du liquide lorsqu'une force est appliquée sur le couvercle (214).

6. Dispositif d'affichage tactile (118) selon la revendication 1, dans lequel le capteur de pression capacitif (114) comprend un premier ensemble d'électrodes et un second ensemble d'électrodes séparé du premier ensemble d'électrode par une couche de barrière.

7. Dispositif d'affichage tactile (118) selon la revendication 1, dans lequel le capteur de pression capacitif (114) comprend une vitre comprenant des électrodes disposées sur au moins un côté.

8. Dispositif d'affichage tactile (118) selon la revendication 1, dans lequel la vessie (216) est disposée entre le capteur de pression capacitif (114) et le couvercle (214) sans adhésif.

9. Dispositif électronique (100) comprenant :
un dispositif d'affichage tactile (118) comprenant :
un écran (112) ;
un capteur de pression capacitif (114) disposé sur l'écran (112) ;
un couvercle (214) éloigné du capteur de pression capacitif (114) ;
au moins un processeur (102) couplé au dispositif d'affichage tactile (118) ;
et **caractérisé en ce que** :
une vessie (216) est disposée dans une cavité entre le capteur de pression capacitif (114) et le couvercle (214), un liquide étant disposé à l'intérieur de la vessie (216).

10. Dispositif électronique (100) selon la revendication 9, dans lequel la vessie (216) s'étend sur le capteur de pression capacitif (114) et recouvre une zone visible de l'écran (212).

11. Dispositif électronique (100) selon la revendication 10, dans lequel la vessie (216) consiste en une vessie de silicone.

12. Dispositif électronique (100) selon la revendication 9, comprenant un réservoir (306) en communication de fluide avec la vessie (216) pour faciliter l'écoulement du liquide dans le réservoir (306) lorsqu'une force est appliquée sur le couvercle (214).

13. Dispositif électronique (100) selon la revendication 9, dans lequel la vessie (216) est expansible au moins d'un côté pour faciliter l'écoulement du liquide lorsqu'une force est appliquée sur le couvercle (214).

14. Dispositif électronique (100) selon la revendication 9, dans lequel le capteur de pression capacitif (214) comprend un premier ensemble d'électrodes et un second ensemble d'électrodes séparé du premier ensemble d'électrodes par une couche de barrière.

15. Dispositif électronique (100) selon la revendication 9, dans lequel la vessie (216) est disposée entre le capteur de pression capacitif (114) et le couvercle (214) sans adhésif.
